# FASCICULE DE BREVET EUROPEEN

(11) **EP 3 187 946 B1**
(45) Date de publication et mention de la délivrance du brevet: **24.02.2021**
(21) Numéro de dépôt: 16204239.4
(22) Date de dépôt: 15.12.2016
(51) Int. Cl.: G05B 19/4099, B64F 5/00, G05B 19/418

(54) **DISPOSITIF ET PROCEDE DE CORRECTION DE DIFFERENCES GEOMETRIQUES DES SURFACES DE PIECES A ASSEMBLER A L´INTERFACE DE L´ASSEMBLAGE**
VORRICHTUNG UND VERFAHREN ZUR KORREKTUR DER GEOMETRISCHEN DIFFERENZEN DER OBERFLÄCHEN VON WERKSTÜCKEN FÜR DEN ZUSAMMENBAU MIT DER MONTAGESCHNITTSTELLE
DEVICE AND METHOD FOR CORRECTING GEOMETRICAL DIFFERENCES OF THE SURFACES OF PARTS TO BE ASSEMBLED AT THE INTERFACE OF THE ASSEMBLY

(30) Priorité: 30.12.2015 FR 1563462
(43) Date de publication de la demande: 05.07.2017
(73) Titulaire: AIRBUS (SAS), 31700 Blagnac (FR)
(72) Inventeur: DOUILLY, Marc, 80300 ALBERT (FR); RABATE, Patrice, 44800 SAINT HERBLAIN (FR); FALGARONE, Hugo, 75009 PARIS (FR)
(74) Mandataire: Gicquel, Olivier Yves Gérard

(56) Documents cités:
- WO-A2-2009/044362
- FR-A1- 3 022 527
- US-A1- 2008 205 763
- US-B2- 6 618 505

## Description

### Domaine de l'invention

La présente invention s'inscrit dans le domaine de l'assemblage de pièces destiné à réaliser une structure mécanique, et concerne plus particulièrement un dispositif et un procédé de correction de différences géométriques des surfaces de pièces à assembler à l'interface de l'assemblage.

### État de l'art

Les imperfections des procédés de fabrication de pièces conduisent à des dispersions sur les formes et dimensions de l'enveloppe géométrique des pièces réalisées, et par conséquent, à des écarts entre la géométrie de leurs surfaces nominales, c'est-à-dire la géométrie de leurs surfaces théoriques recherchées, et la géométrie de leurs surfaces réelles obtenues après fabrication.

Les structures mécaniques complexes sont souvent réalisées par l'assemblage de plusieurs pièces maintenues entre elles par des liaisons mécaniques, opérations d'assemblage qui sont généralement réalisées sur un ou plusieurs postes d'assemblage.

Du fait des différences entre la géométrie des surfaces nominales et la géométrie des surfaces réelles des pièces, ces postes d'assemblage nécessitent des moyens de réglages et d'ajustement géométriques des formes des pièces devant être assemblées, tels que des cales, des remplissages de mastics ou des reprises d'usinage.

La réalisation d'une liaison mécanique dite « complète », c'est-à-dire sans aucun degré de liberté, entre deux pièces, impose que les surfaces des deux pièces en vis à vis dans l'assemblage soit en appui l'une sur l'autre de manière aussi parfaite que possible, c'est-à-dire de manière à minimiser le jeu résiduel à l'interface de ces surfaces et les contraintes introduites par des déformations des pièces lors de l'assemblage. Cela suppose que les deux surfaces soient géométriquement complémentaires à leur interface. Par « interface », on entend la zone de jonction des pièces, correspondant aux surfaces respectives de ces pièces destinées à être assemblées en regard l'une de l'autre.

Suivant une première méthode connue, l'écart à l'interface est supprimé par la déformation locale de l'une ou des deux pièces, due aux efforts introduits lors de la réalisation de la liaison. La déformation, qui peut affecter plus particulièrement la pièce la moins rigide, est accompagnée de modifications de l'état de contraintes mécaniques des pièces.

Cette modification de l'état de contraintes doit être limitée pour ne pas affecter, notamment, la résistance mécanique des pièces, et donc de la structure mécanique. En outre dans le cas de pièces rigides, il n'est pas toujours possible de garantir la déformation de la pièce pour assurer le contact intime des pièces assemblées.

Suivant une autre méthode, il est déposé à l'interface des deux pièces un mastic de remplissage polymérisable qui lorsque les pièces sont pré-assemblées flue dans les zones dans lesquelles le contact entre les pièces n'est pas assuré, et pour ainsi remplir les vides qui seraient formés en absence de mastic Le document WO 2009/044362 A2 décrit une telle méthode.

Toutefois la mise en oeuvre de tels mastics est contraignante et n'est pas toujours possible en fonction des efforts devant être transmis dans la jonction et des éléments d'assemblage utilisés. De plus les mastics ayant des propriétés structurales adaptées sont denses et il peut en résulter un alourdissement de la structure assemblée, d'autant plus gênant qu'il n'est pas maîtrisé.

Il est donc souhaitable de maîtriser la géométrie des surfaces à l'interface des pièces pour assurer un niveau de déformation, et donc de modification de l'état de contraintes, acceptable.

Ce niveau de déformation acceptable est défini lors de la conception de la structure par des spécifications d'assemblage et peut être exprimé par des limites spécifiées sur les écarts géométriques maximaux admissibles des surfaces à l'interface des pièces à assembler.

Afin de limiter ces écarts à l'interface des surfaces de deux pièces à assembler, il est connu de mesurer les différences entre les géométries de surfaces nominale et réelle d'une première pièce afin de déterminer la géométrie d'une surface nominale d'une seconde pièce à fabriquer, ou afin de corriger la géométrie d'une surface nominale d'une seconde pièce déjà fabriquée. Ceci de sorte que les différences entre les géométries des surfaces nominale et réelle de la première pièce soient compensées par la géométrie de la surface nominale de la seconde pièce. Ainsi, la géométrie de la surface nominale de la seconde pièce est déterminée de manière à ce qu'elle soit complémentaire de la géométrie de la surface réelle de la première pièce.

Les différences entre la géométrie des surfaces réelle et nominale sont généralement déterminées par la mesure de la surface de la première pièce, par exemple à l'aide d'une machine à mesurer tridimensionnelle. Par ailleurs, la fabrication de la seconde pièce ou la correction de la géométrie de sa surface nominale est typiquement réalisée par enlèvement de matière, c'est-à-dire, par usinage.

Les opérations de fabrication d'une pièce ou de correction de la géométrie de sa surface nominale sont relativement complexes à mettre en oeuvre dans le cas où cette pièce est une pièce mince, par exemple une tôle, dans la mesure où l'enlèvement de matière peut sensiblement diminuer la résistance mécanique de la pièce. De plus, les opérations de correction peuvent être impossibles à réaliser sans affecter l'intégrité de la pièce si l'épaisseur de la pièce devient inférieure à un minimum nécessaire à la transmission des efforts prévus dans la pièce.

De plus, ces opérations nécessitent des manipulations supplémentaires des pièces à assembler, et donc une perte de temps significative dans la chaîne de production ou d'assemblage.

### Exposé de l'invention

La présente invention a pour objectif de proposer, un dispositif et un procédé de correction de différences géométriques des surfaces de deux pièces à assembler, à l'interface de l'assemblage, dans lequel l'introduction de contraintes, non recherchées, dans les pièces à assembler est limitée sinon évitée.

Un autre objectif de la présente invention est de pouvoir être intégrée à une chaîne de production ou d'assemblage de manière automatisée, au moins en partie.

Un autre objectif de la présente invention est de ne pas nécessiter de manipulation supplémentaire des pièces à assembler.

Un autre objectif de la présente invention est de pouvoir être mise en œuvre pour tout assemblage de structure mécanique, dans des cas variés de formes et ou de matériaux des pièces assemblées.

A cet effet, la présente invention vise, selon un premier aspect, un dispositif de correction de différences géométriques des surfaces de pièces à assembler à l'interface de l'assemblage, comprenant :
- des moyens d'acquisition par la mesure de la géométrie de surfaces d'assemblage de deux pièces destinées à être assemblées l'une à l'autre avec leurs surfaces d'assemblage respectives en vis à vis,
- des moyens de simulation recevant desdits moyens d'acquisition des données représentatives de la géométrie des surfaces d'assemblage, configurés pour simuler l'assemblage des pièces et pour déterminer à partir desdites données, en chaque point mesuré d'un échantillonnage de l'interface, une épaisseur du volume creux résultant des écarts géométriques entre lesdites surfaces d'assemblage,
- des moyens de fabrication additive recevant des moyens de simulation des données représentatives des épaisseurs des volumes creux résultants des écarts géométriques entre lesdites surfaces d'assemblage, et configurés pour déposer de la matière sur la surface d'assemblage d'au moins une des pièces de sorte à combler, au moins en partie, un volume creux résultant desdits écarts géométriques entre les dites surfaces d'assemblage.

Grâce à ces caractéristiques du dispositif, il est obtenu de corriger les écarts géométriques des surfaces à assembler sans dégrader la résistance mécanique des pièces à assembler, dans la mesure où seule de la matière ajoutée est déposée sur la surface d'assemblage d'au moins une des pièces à assembler. Cette matière n'affecte pas l'intégrité des pièces à assembler, quelle que soit leur forme ou le matériau dans lequel elles sont réalisées. La résistance mécanique des pièces aux efforts est ainsi maîtrisée.

En outre, les moyens de mesure, les moyens de simulation et les moyens de fabrication étant adaptés à répondre à des instructions délivrées par des supports de données numériques, le dispositif de correction est entièrement automatisable.

Les données représentatives de la géométrie mesurée de chaque surface d'assemblage sont matérialisées par un échantillonnage de chacune des surfaces de l'interface.

Dans des modes de réalisation particuliers, l'invention répond en outre aux caractéristiques suivantes, mises en œuvre séparément ou en chacune de leurs combinaisons techniquement opérantes.

Dans des modes particuliers de réalisation de l'invention, les moyens de fabrication additive comprennent un dispositif de dépôt de matière solidaire d'une structure porteuse agencée pour déplacer ledit dispositif.

Grâce à cette caractéristique, le dispositif de dépôt peut être disposé en regard de la surface d'assemblage sur laquelle de la matière doit être déposée, quelle que soit la forme de ladite surface, pour autant que ladite surface soit accessible.

Dans des modes particuliers de réalisation, le dispositif de dépôt de matière comprend une tête de dépôt de matière, solidaire d'une structure support montée sur la structure porteuse et agencée pour déplacer ladite tête par rapport à ladite structure porteuse.

Grâce à cette caractéristique, la tête de dépôt peut être disposée en regard de la surface d'assemblage sur laquelle de la matière doit être déposée, de manière précise et plus rapidement en évitant le déplacement continu de la structure porteuse.

Dans des modes particuliers de réalisation, le dispositif de dépôt de matière comprend des moyens de pilotage de la tête adaptés à piloter la tête par rapport à l'une des pièces, en fonction des données représentatives des épaisseurs des volumes creux résultants des écarts géométriques entre lesdites surfaces d'assemblage.

Ainsi la tête est adaptée à être pilotée selon une trajectoire de dépôt prédéfinie.

L'invention vise, selon un autre aspect, un procédé de correction de différences géométriques des surfaces de pièces à assembler à l'interface de l'assemblage comprenant :
- une étape de mesure de la géométrie d'une surface d'assemblage de
   chaque pièce à assembler,
- une étape de simulation de l'assemblage des pièces, à partir de données représentatives de la géométrie mesurée des surfaces d'assemblage, lors de laquelle sont déterminés par calculs des écarts géométriques pour un échantillonnage de points entre les surfaces d'assemblage à l'interface des deux pièces, desquels écarts géométriques sont déterminés des caractéristiques de volumes creux restant entre les surfaces d'assemblage des pièces,
- une étape de dépôt de matière, avant l'assemblage des pièces, sur une surface d'assemblage d'au moins une des deux pièces, de façon à combler, au moins en partie, les volumes creux entre lesdites surfaces résultant des écarts géométriques lorsque les pièces sont assemblées.

Entre les étapes de mesure de la géométrie de la surface d'assemblage de chaque pièce à assembler et l'étape de dépôt de matière sur la surface d'assemblage d'une des pièces, aucune desdites pièces ne nécessite de manipulation.

Dans des modes particuliers de réalisation, l'étape de simulation de l'assemblage des pièces comprend une étape de simulation de mise en position des pièces à partir des données représentatives de la géométrie mesurée des surfaces d'assemblage, lesdites données comprenant des données correspondant à la géométrie mesurée d'au moins un point singulier de la structure, connu et identifiable, de chaque surface d'assemblage permettant de définir la position de surfaces d'assemblage simulées, l'une par rapport à l'autre. Par point singulier de la structure, on entend un point, préexistant ou créé pour cet usage, de la structure identifiable d'une pièce, par exemple un trou, une arête, un sommet, un marquage, une cible etc.

Cette étape permet de respecter les positions que les pièces doivent avoir dans l'assemblage par la prise en compte des positions relatives spécifiées des points singuliers des pièces.

Dans des modes particuliers de réalisation, l'étape de simulation de l'assemblage des pièces comprend une étape de simulation du contact des pièces à partir des données représentatives de la géométrie des surfaces d'assemblage, dans laquelle un contact est simulé entre les surfaces d'assemblage simulées l'une avec l'autre par une mise en appui, le cas échéant sous une contrainte spécifiée en prenant en compte les déformations de chacune des pièces, et sans interpénétration des pièces.

Cette étape permet de simuler l'assemblage de manière plus représentative de la réalité, dans le sens où les formes et positions relatives des surfaces d'assemblage simulées l'une par rapport à l'autre, à la suite de cette mise en appui, est représentative de la position des surfaces d'assemblage des pièces, l'une par rapport à l'autre à la suite de leur assemblage.

Dans des modes particuliers de réalisation, l'étape de simulation de l'assemblage des pièces prend en compte des déformations desdites pièces sous l'effet d'efforts prédéterminés, introduits lors de l'assemblage, en particulier lorsque l'assemblage est réalisé par des fixations réalisant un serrage.

Dans des modes particuliers de réalisation, lors de l'étape de simulation d'assemblage, le volume creux résultant des écarts géométriques entre les surfaces d'assemblage des pièces est discrétisé en un nombre prédéterminé de couches de matière à déposer.

Ainsi, une stratégie de remplissage de ces volumes creux peut être établie et intégrée dans un fichier numérique. Cette stratégie peut consister en la détermination de la trajectoire d'un dispositif de dépôt de matière.

### Présentation des figures

L'invention sera mieux comprise à la lecture de la description suivante, donnée à titre d'exemple nullement limitatif, et faite en se référant aux figures qui représentent :
- figure 1 : une vue schématique de moyens d'acquisition de la géométrie mesurée d'une surface d'assemblage d'une pièce à assembler,
- figure 2 : une vue schématique de moyens de fabrication additive et d'une pièce à assembler,
- figures 3 à 6 : une illustration sur un exemple des opérations successives de correction des différences de géométries entre les deux surfaces des pièces dans la zone où les pièces sont mises en contact par l'assemblage.

### Description détaillée de l'invention

La présente invention est relative à un dispositif de correction de différences géométriques des surfaces de deux pièces qui sont mises en contact lors d'un assemblage desdites deux pièces. Ces surfaces mises en contact, dites « surfaces d'assemblages » dans la présente description, sont destinées à être disposées en regard l'une de l'autre lors de l'assemblage des pièces.

Dans la description et sur les dessins il sera fait référence aux surfaces des pièces en contact. Bien que seules lesdites surfaces soient représentées, il doit être compris que les pièces peuvent être de formes quelconques et que l'invention est applicable, par exemple, à des pièces minces telles que des panneaux de revêtement ou à des éléments profilés ou à des pièces de fortes épaisseurs et de formes quelconques, sans limitations particulières de dimensions et de matériaux autres que celles qui seront imposées par les moyens mis en œuvre.

Le dispositif de correction comprend des moyens d'acquisition 10, par la mesure, de la géométrie des surfaces d'au moins deux pièces à assembler, dans une zone de chacune des pièces dont la surface doit être mise en contact par l'assemblage avec celle d'une autre pièce. Le résultat correspondant de ces mesures est désigné dans la description par l'expression « géométrie mesurée » de la surface correspondante.

La géométrie mesurée d'une surface est réalisée, sur une pièce telle qu'elle est obtenue à l'issu de sa fabrication prête à être assemblée, avec une résolution et une précision spécifiées qui dépendent de la précision recherchée pour les corrections devant être réalisées par le dispositif. Préférentiellement, les moyens d'acquisition 10 sont automatisés.

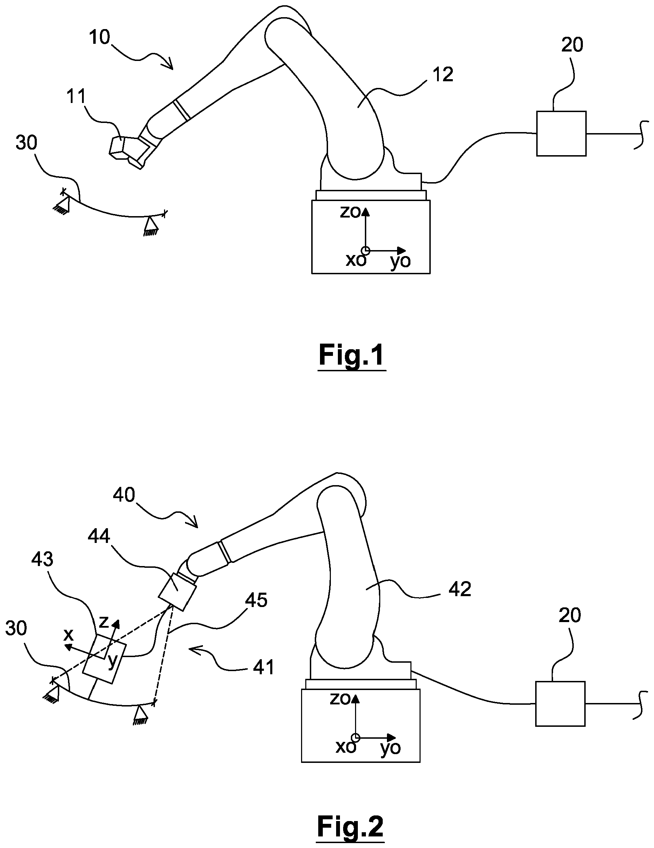

Comme illustré schématiquement sur la figure 1 dans un exemple non limitatif de réalisation, les moyens d'acquisition 10 comprennent un appareil de mesure 11, par exemple sans contact, connu en soi, monté à l'extrémité d'une structure articulée 12 apte à déplacer ledit appareil de mesure 11. Ladite structure articulée 12 est destinée à déplacer l'appareil de mesure 11 en regard de l'ensemble des surfaces d'assemblage, de sorte à acquérir la totalité de la géométrie mesurée de ces surfaces d'assemblage.

La mesure peut être réalisée par tout appareil et procédé connu, par exemple, de manière non limitative, par télémétrie laser, par projection optique de franges (shearographie), par interférométrie optique, par palpeur mécanique.

La structure articulée 12 comprend, dans l'exemple de réalisation non limitatif schématiquement représenté par la figure 1, un bras articulé. A cet effet, le bras articulé comprend si besoin des moyens moteurs aptes à entraîner l'appareil de mesure 11 en rotation et en translation de sorte à disposer du nombre d'axes de mobilité nécessaire pour effectuer la mesure.

Une structure porteuse telle qu'un robot antropométrique représenté sur la figure 1 permet par exemple de disposer, au niveau de l'appareil de mesure, de trois axes de translation et de trois axes de rotation.

Ainsi, il est possible, d'acquérir la géométrie d'une surface d'assemblage d'une pièce réalisée, quelle que soit sa forme, en positionnant l'appareil de mesure 11 dans une position optimale pour réaliser les mesures.

Dans l'exemple de réalisation illustré par la figure 1, les moyens d'acquisition 10 sont représentés dans une position de mesure de la géométrie mesurée d'une surface d'assemblage 30 d'une des pièces à assembler. Pour les besoins de la mesure, chacune des pièces est préférentiellement maintenue en position sur un poste de mesure qui peut également être un poste d'assemblage.

La mesure de la géométrie des surfaces d'assemblage respectives des deux pièces réalisées peut être effectuée par les mêmes moyens d'acquisition ou par des moyens d'acquisitions distincts. Cette dernière alternative trouve son intérêt, par exemple, dans les cas dans lesquels les mesures sont réalisées lorsque les deux pièces sont situées sur deux sites de production différents, de sorte que les pièces sont mesurées à l'issue d'un cycle de fabrication et peuvent être délivrée avec un fichier, ou une référence à un fichier accessible sur un serveur de données, caractérisant la géométrie de la surface pour les opérations d'assemblage.

Les moyens d'acquisition 10 sont reliés à des moyens de simulation 20 auxquels sont transmises des données représentatives de la géométrie mesurée des surfaces d'assemblage. Ces données représentatives de la géométrie mesurée des surfaces d'assemblage représentent un échantillonnage de chacune des surfaces d'assemblage. Ces échantillonnages de points présentent une résolution correspondant à la résolution à laquelle l'appareil de mesure a réalisé la mesure, résolution qui sera le cas échéant modifiée par interpolation si une résolution différente s'avère préférable pour la mise en œuvre des étapes suivant les mesures de géométrie.

Les moyens de simulation 20 sont configurés pour simuler numériquement l'assemblage des pièces afin de déterminer, par calculs, des écarts géométriques 35 entre les géométries mesurées des surfaces d'assemblage de chacune des pièces.

Ces écarts trouvent leurs origines principalement dans des dispersions dans la fabrication des pièces à assembler.

Les moyens de simulation 20 sont configurés pour déterminer les formes, dimensions et position d'un volume « creux » entre les surfaces d'assemblage résultant de ces écarts géométriques 35 entre les deux pièces. Selon notamment, les géométries mesurées des surfaces d'assemblage des deux pièces à assembler, et leurs capacités à se déformer lors de leur assemblage, ce volume creux peut correspondre à plusieurs cavités distinctes séparées par des zones dans lesquelles les surfaces d'assemblage sont en contact l'une avec l'autre. Dans la suite du texte, il est fait référence à un unique volume creux résultant des écarts, quand bien même ce volume creux peut être réparti en plusieurs cavités distinctes.

Il y a lieu de noter que le volume creux est, en pratique, relativement peu épais, l'épaisseur, variable, correspondant à la distance séparant les points en vis à vis sur les deux surfaces rapprochées, en regard des dimensions des surfaces d'assemblage. Il doit être remarqué ici qu'un objectif de l'invention est de corriger des imperfections dimensionnelles associées à des dispersions de fabrication ou à des déviations mineures des dimensions nominales des pièces.

Suivant une méthode de mise en œuvre, les échantillonnages sont interprétés par les moyens de simulation 20 pour former un modèle numérique des géométries mesurées des surfaces d'assemblage, par exemple, sous la forme de nuages de points 31 et 32. Un nuage de points 31 ou 32 est associé à chaque surface d'assemblage dont il constitue un modèle numérique et est, par exemple, définit par les coordonnées des points de chaque nuage de points 31, 32 dans un repère Ra, Rb attaché à la pièce du nuage de points considéré.

Avantageusement, les données représentatives de la géométrie mesurée de chaque surface d'assemblage comprennent des données correspondant à la position et ou la géométrie mesurée de points singuliers de structure connus et identifiables, tels que des trous, arêtes, sommets, etc., voire d'éléments de référence positionnés sur les pièces tels que des marques ou des cibles, qui sont identifiés par les moyens de simulation 20. Ces données correspondant à des éléments, points, lignes, surfaces ou volumes, sont utilisés pour définir des points de référence 33 et 34, de préférence connus de la spécification d'assemblage, afin de simuler une mise en position des nuages de points 31 et 32, avant assemblage, en déterminant la position des nuages de points 31 et 32, l'un par rapport à l'autre.

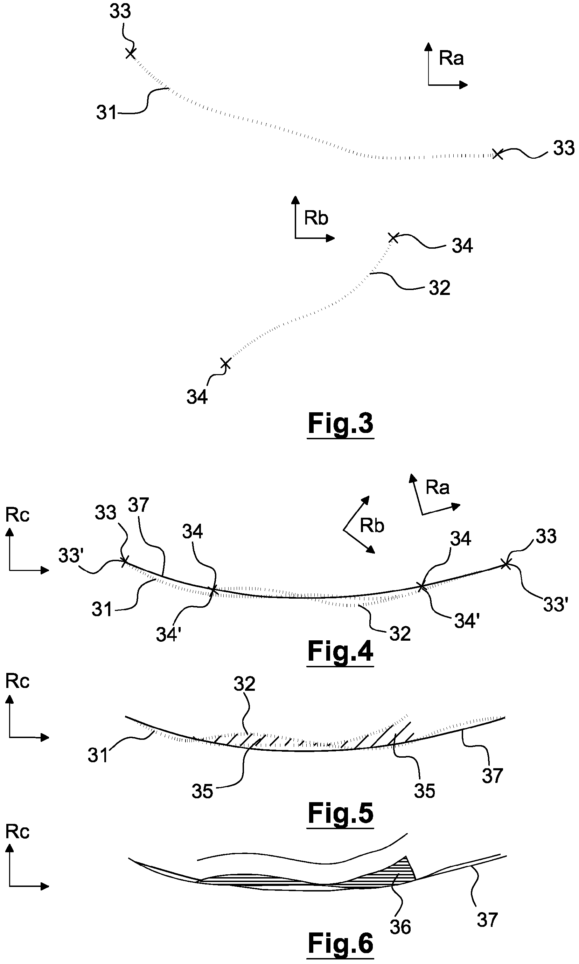

Dans l'exemple de réalisation des figures 3 et 4, chaque nuage de points 31 ou 32, et donc chaque surface d'assemblage simulée, est représenté avec deux points de référence 33 ou 34. Toutefois, rien n'exclut que chaque nuage de points 31 ou 32 comprenne plus ou moins que deux points de référence. De plus rien n'exclut que les nuages de points 31 ou 32 comprennent un nombre de points de référence distinct l'un de l'autre.

La simulation de l'assemblage peut être réalisée en appliquant des exigences de position entre les points de référence 33 et 34 respectifs des nuages de points 31 et 32, de manière analogue aux exigences de mise en position réelle d'une pièce par rapport à l'autre, telles que définies par les spécifications de l'assemblage des pièces. Ainsi la simulation d'assemblage est représentative de l'assemblage qui doit être effectivement réalisé.

Comme l'illustrent les figures 4 et 5 dans un exemple de simulation d'assemblage, les moyens de simulation 20 disposent également de la définition de la surface d'interface nominale 37, définie dans un repère propre Rc, représentative d'un assemblage des pièces aux dimensions nominales.

Il est d'abord réalisé, par simulation, un recalage initial des nuages de points 31, 32 par le recalage des points de référence sur la surface d'interface nominale 37 (figure 4).

Dans l'exemple de réalisation illustré par la figure 4, la position relative des points de référence 33, 34 respectifs des nuages de points 31, 32, les uns par rapport aux autres, est identique à la position relative de points de référence 33', 34' que comporte la surface d'interface nominale 37. Ainsi, les nuages de points 31 et 32 sont positionnés l'un par rapport à l'autre de manière à respecter les exigences de position définies par les spécifications d'assemblage.

Puis au moins l'un des nuages de points correspondant à une surface est déplacé par rapport à l'autre nuage de points pour simuler le contact sans intersection des deux surfaces correspondant aux dits nuages de points (figure 5). Dans ce déplacement il est recherché un décalage minimum des points de référence par rapport à la surface nominale, par exemple en agissant pour chaque point de référence par un déplacement suivant une direction voisine d'une direction orthogonale à un plan osculateur de la surface nominal au point de référence considéré, et en minimisant l'amplitude des déplacements des points de référence, par exemple en recherchant une valeur minimale de la somme quadratique des distances des points de référence des surfaces déplacées au point de référence correspondant de la surface nominale (figure 5).

Il y a lieu de noter que la mise en position des surfaces d'assemblage simulées est réalisée, le cas échéant, en tenant compte des efforts introduits lors de l'assemblage des pièces et qui, dans les limites fixées par les spécifications d'assemblage, sont en mesure de modifier la géométrie des pièces sans pour autant que ces modifications soient critiques. Les surfaces simulées seront, le cas échéant, simulées sous contraintes mécanique, en particulier lorsque la technique de l'assemblage mécanique des pièces sera potentiellement créateur de contraintes mécaniques. Les moyens de simulation 20 sont donc adaptés à simuler l'assemblage des pièces en considérant notamment la capacité de déformation des matériaux dans lesquels elles sont réalisées.

Les exigences de position, telles que définies par les spécifications d'assemblage, appliquées aux points de référence 33 et 34 respectifs des nuages de points 31 et 32 peuvent être telles que lesdits nuages de points 31 et 32 soient fixes l'un par rapport à l'autre.

De manière alternative, les exigences de position appliquées aux points de référence 33 et 34 respectifs des nuages de points 31 et 32 peuvent permettre des déplacements relatifs entre lesdits nuages de points 31 et 32, si les pièces à assembler comprennent un ou plusieurs degrés de libertés lors de leur mise en position. Les possibilités de déplacements relatifs d'un nuage de points 31 ou 32 par rapport à l'autre permet de déterminer, dans les limites possibles, une position des nuages de points 31 et 32, l'un par rapport à l'autre, dans laquelle le volume creux résultant des écarts géométriques 35 sont, de préférence, minimaux.

Une fois la mise en appui entre les deux surfaces simulée, les moyens de simulation 20 déterminent par calcul, à partir des coordonnées résultantes des points de l'échantillonnage représentant lesdites surfaces simulées, une épaisseur du volume creux résultant des écarts géométriques 35 en tout point d'un maillage généré à partir des nuages de points 31 et 32, l'épaisseur étant par exemple calculée suivant une direction orthogonale à un plan osculateur de la surface d'interface nominale 37 au point considéré. Déterminer la valeur de l'épaisseur du volume creux résultant des écarts géométriques 35, en chaque point du maillage, permet de définir les formes, dimensions et position dudit volume creux, tel qu'illustré par la figure 5.

Les moyens de simulation 20 sont adaptés à générer un fichier numérique dans lequel le volume creux résultant des écarts géométriques 35 est discrétisé en couches 36 superposées, comme représenté par la figure 6.

Ces couches 36 sont d'épaisseur prédéfinie, par exemple de 0.05 à 0.15 millimètres, mais cette épaisseur peut être adaptée en fonction des moyens mis en œuvre pour réaliser les couches de matériaux devant être déposées et également d'un état de surface pouvant en résulter. De manière alternative, le volume creux résultant des écarts géométriques 35 peut être discrétisé en couches 36 juxtaposées.

Les moyens de simulation 20 sont configurés pour déterminer, à l'issue de la simulation d'assemblage, la position relative du volume creux résultant des écarts géométriques 35, sur l'une ou l'autre ou sur chaque surface mesurée d'assemblage, à partir des coordonnées desdits points dans le repère Rc et du positionnement du repère Rc en fonction d'un repère absolu lié à la surface d'assemblage nominale.

Les moyens de simulation 20 comprennent, par exemple, un calculateur adapté à réaliser des opérations de calcul et à transmettre des données représentatives de l'épaisseur du volume creux résultant des écarts géométriques 35, en tout point du maillage, à partir du fichier numérique généré. Les données comprennent notamment des données représentatives des dimensions et de la position relative du volume creux résultant des écarts.

Les opérations de calcul correspondant relèvent de la manipulation d'objets virtuels en trois dimensions. Des applications logicielles en ce sens sont aujourd'hui largement connues et mises en œuvre par exemple dans les modeleurs 3D, l'imagerie de synthèse ou encore les logiciels de conceptions en 3 dimensions assistés par ordinateur. L'homme du métier est en mesure de configurer de tels logiciels pour réaliser les calculs pour l'application de l'invention.

Le dispositif de correction comprend également des moyens de fabrication additive 40, par exemple un système d'impression tridimensionnelle, aptes à déposer de la matière sur au moins une des surfaces d'assemblage d'une pièce afin de combler de manière stable, au moins en partie, le volume creux résultant des écarts géométriques 35 entre les géométries mesurées des surfaces d'assemblage. Par les termes « combler au moins en partie », on entend que la matière déposée, le cas échéant sur les surfaces d'assemblage des deux pièces, doit occuper le volume creux résultant des écarts géométriques 35, partiellement ou complètement.

Déposer de la matière sur les surfaces d'assemblage des deux pièces permet, lorsque ces deux opérations de dépose de matière peuvent se faire simultanément, de réduire le temps de dépose de matière, et par conséquent d'optimiser le temps de production de l'assemblage. Cette solution peut également être mise en œuvre lorsque la géométrie d'une des pièces conduit à faciliter localement le dépôt de matière.

Ces moyens de fabrication additive 40 sont reliés aux moyens de simulation 20 et sont configurés pour recevoir et interpréter le fichier numérique généré par lesdits moyens de simulations 20 à la suite de la simulation d'assemblage.

Les moyens de fabrication additive 40 comprennent un dispositif de dépôt de matière 41, solidaire d'une structure porteuse 42 apte à délacer ledit dispositif de dépôt de matière 41 en vis-à-vis du volume creux résultant des écarts géométriques 35 à corriger sur une surface d'assemblage.

La structure porteuse 42 est adaptée à déplacer le dispositif de dépôt de matière 41 en vis-à-vis de l'ensemble de la superficie de la géométrie mesurée de la surface d'assemblage. Ladite structure porteuse 42 comprend, à cet effet, des moyens moteurs aptes à entraîner le dispositif de dépôt de matière 41 en rotation selon, par exemple, trois axes orthogonaux, et en translation selon ces trois axes.

A titre d'exemple non limitatif, la structure porteuse 42 peut être apte à déplacer la tête 43 sur quelques mètres ou dizaines de mètres.

La structure porteuse 42 peut être disposée, par rapport à la structure articulée 12, en aval d'une chaîne de production, ou sur un autre site de production.

Alternativement, l'appareil de mesure 11 et le dispositif de dépôt de matière 41 sont montés sur une même structure porteuse. Ladite structure porteuse est alors adaptée à sélectionner l'appareil de mesure 11 ou le dispositif de dépôt de matière 41 en fonction du besoin. Cette caractéristique est avantageuse dans la mesure où la pièce à assembler peut être maintenue immobilisée sur un même poste, voire sur un poste d'assemblage, de l'opération de mesure de la géométrie de sa surface d'assemblage jusqu'à l'opération de correction des écarts géométriques 35. La manipulation de la pièce est ainsi réduite, et le temps de production de l'assemblage optimisé.

Dans l'exemple de réalisation non limitatif schématiquement représenté par la figure 2, la structure porteuse 42 comprend un bras articulé.

Toutefois, dans d'autres exemples de réalisation non représentés, la structure porteuse 42, au même titre que la structure articulée 12, peut comprendre tout système mécanique, par exemple robot anthropométrique, portique mobile, hexapode..., à la portée de l'homme du métier, adapté à déplacer ledit dispositif de dépôt de matière en tout point de l'espace, dans une zone prédéfinie et avec des orientations souhaitées.

Le dispositif de dépôt de matière 41 comprend une tête 43 s'étendant selon un axe longitudinal, apte à délivrer de la matière selon, par exemple, une direction parallèle à son axe longitudinal. La matière est destinée à être déposée, par la tête 43, sur la surface d'assemblage 30, dans le volume creux résultant des écarts géométriques 35 à corriger, par exemple, sous la forme d'un fil fusible de matière, à partir d'une réserve de matière, sous forme de fil ou autre.

Le matériau est choisi de manière à ce qu'il réponde favorablement à un certain nombre d'exigences techniques, notamment définies par les spécifications d'assemblage ou par l'emploi de la structure mécanique résultant de l'assemblage des pièces. Ces exigences techniques peuvent être caractérisées par un niveau de résistance aux contraintes mécaniques, par la capacité de conductivité thermique ou électrique, la capacité d'adhérence, la capacité à résister à une température en exploitation, la capacité à résister à un environnement chimique ou le comportement du matériau au contact du matériau dans lequel sont réalisées les pièces et de manière générale toute contrainte à laquelle sera soumis l'assemblage en utilisation.

A titre d'exemple non limitatifs, le matériau ou les matériaux constituant la matière déposée peut être un matériau polymère, telle que de l'acrylonitrile butadiène styrène (ABS), ou un matériau métallique, tel que de l'aluminium, et d'une manière générale tout matériau pouvant être déposé et durci à la surface d'une pièce considérée, de par ses caractéristiques physico-chimiques, sa préparation et son procédé de dépôt.

Préférentiellement, le volume creux résultant des écarts géométriques 35 entre les géométries mesurées des surfaces d'assemblage est discrétisé de sorte que l'épaisseur de chaque couche 36 corresponde à l'épaisseur déposée par chaque passage de la tête 43.

Le dispositif de dépôt de matière est configuré pour présenter une résolution et une précision en adéquation avec le respect des spécifications d'assemblage.

La tête 43 peut être solidaire d'une structure support 44, montée sur le bras articulé, tel que représenté par la figure 2 dans un exemple de réalisation non limitatif. La structure support est dotée de moyens moteurs aptes à déplacer ladite tête 43 par rapport au bras articulé. Il est ainsi possible pour des déplacements limités et exigeant une précision de positionnement supérieure aux performances du bras articulé utilisé de déplacer la tête 43 en regard de la position relative, sur une surface d'assemblage, de tout ou partie du volume creux résultant des écarts géométriques 35, en fonction des dimensions comparées des capacités de déplacement de la structure support et du volume creux.

A titre d'exemple non limitatif, la structure support 44 est configurée pour déplacer la tête 43 sur quelques dizaines de centimètres.

Avantageusement, les moyens moteurs de la structure support 44 sont aptes à entraîner la tête 43 en rotation selon au moins deux axes non parallèles orthogonaux à l'axe longitudinal de la tête 43. Ainsi, la tête 43 est en mesure d'adapter la direction dans laquelle elle délivre la matière pour qu'elle soit normale à la surface d'assemblage, de sorte que la dépose de matière soit réalisée dans des conditions optimales pour former des couches d'épaisseur sensiblement constante. Les moyens moteurs de la structure support 44 sont également adaptés à entraîner la tête 43 en translation selon, par exemple, trois axes orthogonaux entre eux, de sorte que la tête 43 soit apte à se déplacer à l'intérieur du volume creux caractérisant des écarts géométriques 35 à corriger sur une surface d'assemblage, quelles que soient la forme et la position dans l'espace de la géométrie mesurée de ladite surface d'assemblage.

Dans d'autres exemples de réalisation de l'invention, la tête 43 peut être montée directement sur le bras articulé et être uniquement déplacée par ledit bras articulé.

Le dispositif de dépôt de matière 41 comprend, de plus, des moyens de pilotage 45 de la tête 43, aptes acquérir la position des points de référence 33 et 34 sur les surfaces d'assemblage, dans le repère absolu, de sorte à établir un système d'axes de référence et à actionner les moyens moteurs respectifs du bras articulé et de la structure support 44 afin d'entraîner la tête 43 en déplacement. Ces moyens moteurs sont actionnés suite à l'interprétation d'au moins un fichier numérique généré par les moyens de simulation 20. De manière avantageuse, ce fichier numérique définit une stratégie de remplissage des volumes creux, et notamment des trajectoires de dépose de matière de la tête 43, déterminées lors de la simulation d'assemblage. Ces trajectoires visent à combler, au moins en partie, le volume creux résultant des écarts géométriques 35 à l'interface des géométries mesurées des surfaces d'assemblage, en entraînant la tête 43 à déposer de la matière successivement sur au moins une partie de chaque couche 36. La position du volume creux résultant des écarts géométriques 35 est exprimée par rapport aux points de référence 33 ou 34.

Alternativement, dans un exemple non limitatif de réalisation, la position relative du volume creux résultant des écarts géométriques 35 à corriger sur une surface d'assemblage est déterminée dans un système de coordonnées attaché à un repère de référence. Ce repère de référence est ensuite utilisé par le dispositif de dépôt de matière 41.

Avantageusement, le dépôt de matière sur la surface d'assemblage peut être réalisé de sorte à respecter l'intégrité et les tolérances géométriques d'un trou existant, par exemple, nécessaire pour la réalisation d'un assemblage ultérieur. Si besoin, afin de respecter les tolérances géométriques dudit trou, une étape de reprise du trou à la côte finale est réalisée.

Le dispositif est mis en œuvre dans un procédé de correction des écarts géométriques 35 des surfaces de pièces à assembler à l'interface de l'assemblage.

Le procédé comporte :
- une étape de mesure de la géométrie d'une surface d'assemblage de chaque pièce à assembler,
- une étape de simulation de l'assemblage des pièces, à partir de données représentatives de la géométrie mesurée des surfaces d'assemblage, lors de laquelle sont déterminés par calculs des écarts géométriques pour un échantillonnage de points entre les surfaces d'assemblage à l'interface des deux pièces, desquels écarts géométriques sont déterminés des caractéristiques de volume creux restant entre les surfaces d'assemblage des pièces,
- une étape de dépôt de matière, avant l'assemblage des pièces, sur une surface d'assemblage d'au moins une des deux pièces, de façon à combler, au moins en partie, les volume creux entre lesdites surfaces résultant des écarts géométriques lorsque les pièces sont assemblées.

Les dites étapes étant successives pour réaliser un assemblage dans l'ordre ou elles sont indiquées.

L'étape de mesure est réalisée par les moyens d'acquisition 10. Dans cette étape, à la suite de la mesure de la géométrie d'une surface d'assemblage de chaque pièce à assembler, des données représentatives de la géométrie mesurée des surfaces d'assemblage des pièces, comprenant un échantillonnage de chacune de ces surfaces, sont transmises aux moyens de simulation 20 en vue de réaliser une étape de simulation de l'assemblage des pièces.

Ces données sont alors interprétées par les moyens de simulation 20, par exemple, tel qu'illustré dans un exemple de réalisation non limitatif par la figure 1, sous la forme de nuages de points 31 et 32 issus de la mesure. Un nuage de points 31 ou 32 est associé à chaque géométrie mesurée d'une surface d'assemblage et est, par exemple, compris dans un repère propre, Ra ou Rb, auquel sont respectivement attachées les coordonnées des points de chaque nuage de points 31 ou 32. Dans chaque nuage de points 31 ou 32 sont identifiés des points de référence 33 ou 34 des pièces. Ces points de référence permettent une mise en position des nuages de points 31 et 32 l'un par rapport à l'autre, de manière analogue à une mise en position des deux pièces à assembler, l'une par rapport à l'autre, telle que définie par les spécifications d'assemblage de ces pièces.

Les moyens de simulation 20 peuvent disposer d'une surface d'interface nominale 37 représentative d'un assemblage des pièces aux formes nominales, et intégrer ladite surface nominale 37 dans une simulation de mise en position des nuages de points 31 et 32. La simulation d'assemblage des pièces aux dimensions nominales est réalisée dans un repère propre Rc associée à la surface d'interface nominale 37.

La surface d'interface nominale 37 comprend des points de référence nominaux 33' et 34', correspondant respectivement aux points de références 33 et 34 des pièces. En vue de positionner les nuages de points 31 et 32, l'un par rapport à l'autre, dans un repère commun, leurs points de référence 33 et 34 respectifs sont positionnés, le repère Rc, respectivement sur les points de référence 33' et 34', comme représenté en figure 4.

La distance relative entre les deux nuages de points 31 et 32, en tout point desdits nuages, est ensuite ajustée de sorte à simuler un contact entre les deux surfaces simulées représentées par lesdits nuages de points 31 et 32, par une mise en appui, comme illustré par la figure 5. Plus précisément, la distance relative entre les nuages de points 31 et 32 est ajustée de sorte que les surfaces d'assemblage simulées soient en appui l'une sur l'autre, sans interpénétration des pièces, de manière à simuler l'assemblage des pièces tel que défini par les spécifications d'assemblage.

Les moyens de simulation 20 déterminent ensuite, par calcul, la valeur de l'épaisseur du volume creux résultant des écarts géométriques 35, par rapport à un plan osculateur de la surface d'interface nominale 37, et en tout point d'un maillage généré à partir des nuages de points 31 et 32.

Le volume creux résultant des écarts géométriques 35 est ensuite discrétisé en un nombre prédéterminé de couches 36 de matière à déposer, de sorte à définir, dans un fichier numérique généré, une stratégie de remplissage de ces volumes.

Une étape de dépôt de matière sur au moins une des deux pièces est réalisée par le dispositif de dépôt de matière 41.

Préférentiellement, le dispositif de dépôt de matière 41 dépose de la matière sur une seule des surfaces d'assemblage. Toutefois, de manière alternative, le dispositif de dépôt de matière 41 peut déposer de la matière sur les deux surfaces d'assemblage. En outre, si les deux pièces à assembler ne sont pas sur le même site de production, un second dispositif de dépôt de matière peut réaliser le dépôt de matière sur une des pièces.

Les deux pièces comprenant les surfaces d'assemblage peuvent ensuite être assemblées selon les spécifications d'assemblage. A cet effet, les surfaces d'assemblage de chaque pièce sont disposées en regard l'une de l'autre, de sorte que le volume creux résultant des écarts géométriques 35 entre lesdites surfaces d'assemblage soit au moins en partie comblé.

Préférentiellement, ce volume creux est complètement comblé à l'issu de l'assemblage des pièces, de sorte que les deux pièces soient en appui l'une sur l'autre, en tout point de leur interface. Grâce à cette disposition, il est assuré une diminution des espaces pouvant rester vides entre les pièces et un contact uniforme entre les pièces. Il en résulte par exemple un assemblage facilité et de meilleures conditions de mise en œuvre des fixations et ou colles utilisées pour l'assemblage. Il en résulte, par exemple, un meilleur comportement de la structure résultant de l'assemblage des pièces vis à vis d'une usure de contact ou d'une corrosion sous microdéplacements à l'interface des deux pièces.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant un assemblage de deux pièces selon deux surfaces d'assemblage. Rien n'exclut cependant, suivant d'autres exemples, de considérer un assemblage de plus de deux pièces et/ou selon plus de deux surfaces d'assemblage.

## Revendications

1. Dispositif de correction de différences géométriques des surfaces de pièces à assembler à l'interface de l'assemblage, comprenant :
- des moyens d'acquisition (10) par la mesure de la géométrie de surfaces d'assemblage de deux pièces destinées à être assemblées l'une à l'autre avec leurs surfaces d'assemblage respectives en vis à vis,
ledit dispositif étant **caractérisé en ce qu'**il comporte :
- des moyens de simulation (20) recevant desdits moyens d'acquisition (10) des données représentatives de la géométrie des surfaces d'assemblage, configurés pour simuler l'assemblage des pièces et pour déterminer à partir desdites données, en chaque point mesuré d'un échantillonnage de l'interface, une épaisseur du volume creux résultant des écarts géométriques (35) entre lesdites surfaces d'assemblage,
- des moyens de fabrication additive (40) recevant des moyens de simulation (20) des données représentatives des épaisseurs des volumes creux résultants des écarts géométriques (35) entre lesdites surfaces d'assemblage, et configurés pour déposer de la matière sur la surface d'assemblage d'au moins une des pièces de sorte à combler, au moins en partie, le volume creux résultant desdits écarts géométriques entre les dites surfaces d'assemblage.

2. Dispositif de correction selon la revendication 1, dans lequel les moyens de fabrication additive (40) comprennent un dispositif de dépôt de matière (41) solidaire d'une structure porteuse (42) agencée pour déplacer ledit dispositif.

3. Dispositif de correction selon la revendication 2, dans lequel le dispositif de dépôt de matière (41) comprend une tête (43) de dépôt de matière, solidaire d'une structure support (44) montée sur la structure porteuse (42) et agencée pour déplacer ladite tête (43) par rapport à ladite structure porteuse (42).

4. Dispositif de correction selon l'une des revendications 2 ou 3, dans lequel le dispositif de dépôt de matière (41) comprend des moyens de pilotage (45) de la tête (43) adaptés à piloter la tête (43) par rapport à l'une des pièces, en fonction des données représentatives des épaisseurs des volumes creux résultants des écarts géométriques (35) entre lesdites surfaces d'assemblage.

5. Procédé de correction de différences géométriques des surfaces de pièces à assembler à l'interface de l'assemblage comprenant :
- une étape de mesure de la géométrie d'une surface d'assemblage de chaque pièce à assembler,
**caractérisé en ce qu'**il comprend en outre :
- une étape de simulation de l'assemblage des pièces, à partir de données représentatives de la géométrie mesurée des surfaces d'assemblage, lors de laquelle sont déterminés par calculs des écarts géométriques pour un échantillonnage de points entre les surfaces d'assemblage à l'interface des deux pièces, desquels écarts géométriques sont déterminés des caractéristiques de volumes creux restant entre les surfaces d'assemblage des pièces,
- une étape de dépôt de matière, avant l'assemblage des pièces, sur une surface d'assemblage d'au moins une des deux pièces, de façon à combler, au moins en partie, les volumes creux entre lesdites surfaces résultant des écarts géométriques lorsque les pièces sont assemblées.

6. Procédé de correction selon la revendication 5, dans lequel l'étape de simulation de l'assemblage des pièces comprend une étape de simulation de mise en position des pièces à partir des données représentatives de la géométrie mesurée des surfaces d'assemblage, lesdites données comprenant des données correspondant à la géométrie mesurée d'au moins un point singulier de la structure, identifiable, de chaque surface d'assemblage permettant de déterminer la position de surfaces d'assemblage simulées, l'une par rapport à l'autre.

7. Procédé de correction selon la revendication 6, dans lequel l'étape de simulation de l'assemblage des pièces comprend une étape de simulation du contact des pièces à partir des données représentatives de la géométrie des surfaces d'assemblage, dans laquelle un contact est simulé entre les surfaces d'assemblage simulées l'une avec l'autre par une mise en appui, et sans interpénétration des pièces.

8. Procédé de correction selon l'une des revendications 5 à 7, dans lequel l'étape de simulation de l'assemblage des pièces prend en compte des déformations desdites pièces sous l'effet d'efforts prédéterminés, introduits lors de l'assemblage.

9. Procédé de correction selon l'une des revendications 5 à 8, dans lequel, lors de l'étape de simulation d'assemblage, le volume creux résultant des écarts géométriques (35) entre les surfaces d'assemblage des pièces sont discrétisés en un nombre prédéterminé de couches (36) de matière à déposer.

## Patentansprüche

1. Vorrichtung zur Korrektur von geometrischen Differenzen der Oberflächen von zu verbindenden Werkstücken an der Montageschnittstelle, beinhaltend:
- Mittel zum Erfassen (10), durch Messen, der Geometrie von Montageoberflächen von zwei Werkstücken, die dazu bestimmt sind, miteinander verbunden zu werden, wobei sich ihre jeweiligen Montageoberflächen gegenüberliegen,
wobei die Vorrichtung **dadurch gekennzeichnet ist, dass** sie Folgendes umfasst:
- Simulationsmittel (20), die Daten, die für die Geometrie der Montageoberflächen repräsentativ sind, von den Erfassungsmitteln (10) empfangen und die dazu konfiguriert sind, die Montage der Werkstücke zu simulieren und anhand der Daten an jedem gemessenen Punkt einer stichprobenartigen Abtastung der Schnittstelle eine Höhe des Hohlraums, der sich aus den geometrischen Abweichungen (35) zwischen den Montageoberflächen ergibt, zu bestimmen,
- Mittel zur additiven Fertigung (40), die Daten, die für die Höhen der Hohlräume, die sich aus den geometrischen Abweichungen (35) zwischen den Montageoberflächen ergeben, repräsentativ sind, von den Simulationsmitteln (20) empfangen und die dazu konfiguriert sind, Werkstoff auf die Montageoberfläche mindestens eines der Werkstücke aufzubringen, um den Hohlraum, der sich aus den geometrischen Abweichungen zwischen den Montageoberflächen ergibt, mindestens teilweise auszugleichen.

2. Korrekturvorrichtung nach Anspruch 1, wobei die Mittel zur additiven Fertigung (40) eine Vorrichtung zum Aufbringen von Werkstoff (41) beinhalten, die fest an einer Tragstruktur (42) angebracht ist, welche angeordnet ist, um die Vorrichtung zu bewegen.

3. Korrekturvorrichtung nach Anspruch 2, wobei die Vorrichtung zum Aufbringen von Werkstoff (41) einen Kopf (43) zum Aufbringen von Werkstoff beinhaltet, der fest an einer Haltestruktur (44) angebracht ist, welche an der Tragstruktur (42) befestigt und angeordnet ist, um den Kopf (43) im Verhältnis zu der Tragstruktur (42) zu bewegen.

4. Korrekturvorrichtung nach einem der Ansprüche 2 oder 3, wobei die Vorrichtung zum Aufbringen von Werkstoff (41) Mittel zum Steuern (45) des Kopfes (43) beinhaltet, die dazu angepasst sind, den Kopf (43) im Verhältnis zu einem der Werkstücke in Abhängigkeit von den Daten, die für die Höhen der Hohlräume, die sich aus den geometrischen Abweichungen (35) zwischen den Montageoberflächen ergeben, repräsentativ sind, zu steuern.

5. Verfahren zur Korrektur von geometrischen Differenzen der Oberflächen von zu verbindenden Werkstücken an der Montageschnittstelle, beinhaltend:
- einen Schritt des Messens der Geometrie einer Montageoberfläche jedes zu verbindenden Werkstücks,
**dadurch gekennzeichnet, dass** es ferner Folgendes beinhaltet:
- einen Schritt des Simulierens der Montage der Werkstücke anhand von Daten, die für die gemessene Geometrie der Montageoberflächen repräsentativ sind, während dessen für eine stichprobenartige Abtastung von Punkten zwischen den Montageoberflächen an der Schnittstelle der zwei Werkstücke durch Berechnungen geometrische Abweichungen bestimmt werden, wobei anhand der geometrischen Abweichungen Eigenschaften von Hohlräumen, die zwischen den Montageoberflächen der Werkstücke verbleiben, bestimmt werden,
- einen Schritt des Aufbringens von Werkstoff, vor der Montage der Werkstücke, auf eine Montageoberfläche von mindestens einem der zwei Werkstücke, um die Hohlräume zwischen den Oberflächen, die sich beim Verbinden der Werkstücke aus den geometrischen Abweichungen ergeben, mindestens teilweise auszugleichen.

6. Korrekturverfahren nach Anspruch 5, wobei der Schritt des Simulierens der Montage der Werkstücke einen Schritt des Simulierens der Positionierung der Werkstücke anhand der Daten, die für die gemessene Geometrie der Montageoberflächen repräsentativ sind, beinhaltet, wobei die Daten Daten beinhalten, die der gemessenen Geometrie mindestens eines identifizierbaren Kennpunkts der Struktur jeder Montageoberfläche entsprechen und die es erlauben, die Position von simulierten Montageoberflächen im Verhältnis zueinander zu bestimmen.

7. Korrekturverfahren nach Anspruch 6, wobei der Schritt des Simulierens der Montage der Werkstücke einen Schritt des Simulierens des Kontakts der Werkstücke anhand von Daten, die für die Geometrie der Montageoberflächen repräsentativ sind, beinhaltet, wobei ein Kontakt zwischen den simulierten Montageoberflächen durch ein Anlegen simuliert wird, ohne dass sich die Werkstücke dabei gegenseitig durchdringen.

8. Korrekturverfahren nach einem der Ansprüche 5 bis 7, wobei der Schritt des Simulierens der Montage der Werkstücke Verformungen der Werkstücke durch die Einwirkung vorbestimmter Kräfte, die während der Montage eingebracht werden, berücksichtigt.

9. Korrekturverfahren nach einem der Ansprüche 5 bis 8, wobei während des Schritts des Simulierens der Montage der Hohlraum, der sich aus den geometrischen Abweichungen (35) zwischen den Montageoberflächen der Werkstücke ergibt, in eine vorbestimmte Anzahl von Schichten (36) eines aufzubringenden Werkstoffs unterteilt wird.

## Claims

1. Device for correcting geometrical differences of surfaces of parts to be assembled at the interface of the assembly, comprising:
- means (10) for acquiring, by measurement, the geometry of assembly surfaces of two parts intended to be assembled with one another with their respective assembly surfaces facing one another,
said device being **characterized in that** it comprises:
- simulation means (20) receiving from said acquisition means (10) data representative of the geometry of the assembly surfaces, configured to simulate the assembly of the parts and to determine, from said data, at each point measured of a sampling of the interface, a thickness of the hollow volume resulting from the geometrical differences (35) between said assembly surfaces,
- additive manufacturing means (40) receiving from the simulation means (20) data representative of the thicknesses of the hollow volumes resulting from the geometrical differences (35) between said assembly surfaces, and configured to deposit material on the assembly surface of at least one of the parts so as to fill, at least partly, the hollow volume resulting from said geometrical differences between said assembly surfaces.

2. Correction device according to Claim 1, wherein the additive manufacturing means (40) comprise a material deposition device (41) secured to a supporting structure (42) arranged to displace said device.

3. Correction device according to Claim 2, wherein the material deposition device (41) comprises a material deposition head (43), secured to a support structure (44) mounted on the supporting structure (42) and arranged to displace said head (43) with respect to said supporting structure (42).

4. Correction device according to one of Claims 2 or 3, wherein the material deposition device (41) comprises means (45) for driving the head (43) suitable for driving the head (43) with respect to one of the parts, as a function of the data representative of the thicknesses of the hollow volumes resulting from the geometrical differences (35) between said assembly surfaces.

5. Method for correcting geometrical differences of the surfaces of parts to be assembled at the interface of the assembly comprising:
- a step of measuring the geometry of an assembly surface of each part to be assembled,
**characterized in that** it further comprises:
- a step of simulation of the assembly of the parts, from data representative of the measured geometry of the assembly surfaces, during which geometrical differences are determined by calculations for a sampling of points between the assembly surfaces at the interface of the two parts, from which geometrical differences of the characteristics of hollow volumes remaining between the assembly surfaces of the parts are determined,
- a step of depositing material, before the assembly of the parts, on an assembly surface of at least one of the two parts, so as to fill, at least partly, the hollow volumes between said surfaces resulting from the geometrical differences when the parts are assembled.

6. Correction method according to Claim 5, wherein the step of simulating the assembly of the parts comprises a step of simulating the positioning of the parts from the data representative of the measured geometry of the assembly surfaces, said data comprising data corresponding to the measured geometry of at least one identifiable singular point of the structure, of each assembly surface making it possible to determine the position of simulated assembly surfaces, with respect to one another.

7. Correction method according to Claim 6, wherein the step of simulating the assembly of the parts comprises a step of stimulating the contact of the parts from the data representative of the geometry of the assembly surfaces, wherein a contact is simulated between the simulated assembly surfaces with one another by a bearing contact, and without interpenetration of the parts.

8. Correction method according to one of Claims 5 to 7, wherein the step of simulating the assembly of the parts takes into account deformations of said parts under the effect of predetermined loads, introduced during assembly.

9. Correction method according to one of Claims 5 to 8, wherein, in the assembly simulation step, the hollow volume resulting from the geometrical differences (35) between the assembly surfaces of the parts are discretized into a predetermined number of layers (36) of materials to be deposited.
